(19) **Europäisches Patentamt / European Patent Office / Office européen des brevets**

(11) **EP 3 549 909 A1**

(12) # EUROPEAN PATENT APPLICATION
published in accordance with Art. 153(4) EPC

(43) Date of publication:
**09.10.2019 Bulletin 2019/41**

(51) Int Cl.:
***C01B 11/06*** (2006.01)

(21) Application number: **17879603.3**

(22) Date of filing: **30.11.2017**

(86) International application number:
**PCT/JP2017/043050**

(87) International publication number:
**WO 2018/105485 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.12.2016 JP 2016235616**

(71) Applicant: **Kaneka Corporation Osaka-shi, Osaka 530-8288 (JP)**

(72) Inventor: **KUWAHATA Mitsuyoshi Takasago-shi, Hyogo 676 -8688 (JP)**

(74) Representative: **Hoffmann Eitle Patent- und Rechtsanwälte PartmbB Arabellastraße 30 81925 München (DE)**

(54) **SODIUM HYPOCHLORITE PENTAHYDRATE CRYSTAL POWDER, PRODUCTION METHOD THEREFOR, AND AQUEOUS SOLUTION OF SODIUM HYPOCHLORITE USING SAME**

(57)     The present invention relates to a production method for sodium hypochlorite pentahydrate crystal powder, the method comprising: drying wet sodium hypochlorite pentahydrate crystals with a gas until the moisture content of the crystals reaches 2.5% by weight or lower, wherein the gas has a temperature of less than 25°C, a dew point of -2°C or lower, and a carbon dioxide concentration of 250 ppm to 1600 ppm, and wherein the wet sodium hypochlorite pentahydrate crystals have a sodium hydroxide concentration of 0.01% by weight or higher.

The present invention also relates to a sodium hypochlorite pentahydrate crystal powder, the powder comprising sodium carbonate, wherein the sodium carbonate is present on surfaces of the sodium hypochlorite pentahydrate crystals, and wherein the powder has a sodium carbonate concentration of 0.1% by weight or more and a moisture content between crystals of 2.5% by weight or less.

EP 3 549 909 A1

**Description**

[Technical Field]

The present invention relates to a production method for sodium hypochlorite pentahydrate crystal powder, sodium hypochlorite pentahydrate crystal powder, and an aqueous solution of sodium hypochlorite using the same.

[Background Art]

Sodium hypochlorite (NaClO) is excellent in bleaching effect, bactericidal effect, etc. and therefore is widely used as a disinfectant agent for water and sewerage, hot spring facilities, pools, domestic use, etc. Furthermore, sodium hypochlorite is used in a wide range of applications including, for example, bleaching agents for the paper industry, the textile industry, etc., wastewater treatment agents for various industries, and slime cleaning agents that prevent slime problems (problems such as a decrease in thermal efficiency and clogging of water pipes due to slime generation caused by algae, bacteria, etc.) that occur in plant cooling circulation systems, wastewater treatment systems, etc. at various factories. In addition, the oxidative effect of sodium hypochlorite is also used in the field of organic synthesis, and sodium hypochlorite is widely used in the manufacture of pharmaceuticals, agrochemicals, etc.

On the other hand, sodium hypochlorite undergoes a disproportionation reaction represented by Chemical Formula 1 below at room temperature to be gradually decomposed into sodium chlorate and sodium chloride.

$$[\text{Chemical Formula 1}] \qquad 3NaClO \rightarrow NaClO_3 + 2NaCl$$

Therefore, sodium hypochlorite is usually cooled to approximately 20°C or lower to be stored for a long period to some extent, for example, in a product storage tank at a factory, a tanker during transport, and a receiving tank. As another method, sodium hypochlorite is stored while being made into an aqueous solution of sodium hypochlorite to have a reduced concentration and thereby to slow the rate of decomposition caused by the disproportionation reaction.

However, when a sodium hypochlorite supplier stores sodium hypochlorite by the methods described above, the cooling facility cost and cooling cost for the storage tank for an aqueous solution of sodium hypochlorite as well as the cost for transporting an aqueous sodium hypochlorite solution while cooling it increase, which results in an increase in product cost. Furthermore, also in each waterworks bureau, excessive costs for workers and inspections are required, for example, for cooling of disinfectant storage tanks, temperature control, and sodium chlorate concentration control, etc., which is the bottleneck in reducing water cost.

Known sodium hypochlorite crystals include monohydrate, 2.5 hydrate, pentahydrate, hexahydrate, and heptahydrate, among which pentahydrate can be obtained using, as a raw material, a highly concentrated aqueous sodium hydroxide solution that is comparatively easy to produce. However, it has problems that it tends to melt at ordinary temperature, it further is deliquescent and thereby also tends to be liquefied, and decomposition thereof proceeds easily even in an air atmosphere or nitrogen atmosphere. If it is stored in crystalline form, it can have a greatly reduced volume compared to that of a product in liquid form, and therefore there is an advantage that the cooling cost, transportation cost, etc. can be greatly reduced. However, due to the decomposition property thereof, the business form of transporting and selling crystals themselves could not be easily employed even when various hydrate crystals are produced.

On the other hand, it has been proposed to dry wet crystals of sodium hypochlorite in order to suppress the decomposition of sodium hypochlorite to improve the stability thereof. For example, Patent Document 1 describes that a concentrated aqueous solution of sodium hypochlorite having an effective chlorine concentration of 25% is cooled at around -10°C and precipitated crystals are separated and then are brought into contact with dry air or a dry inert gas. Patent Document 2 describes that when wet crystals of sodium hypochlorite containing, as a main component, 2.5 hydrate of sodium hypochlorite are dried, said crystals are dried while the temperature is raised continuously or in stages in an atmosphere of 25°C to 40°C in the presence of a small amount of sodium hydroxide. Furthermore, Non-Patent Document 1 describes that the decomposition rate of sodium hypochlorite crystals in the disproportionation reaction of the sodium hypochlorite crystals is suppressed by water of crystallization and that decomposition of the sodium hypochlorite crystals is promoted by carbon dioxide in the air.

Moreover, Patent Document 3 describes a method of producing sodium hypochlorite pentahydrate, the method making it possible to obtain an aqueous solution of sodium hypochlorite having a low concentration of sodium chloride and an effective chlorine concentration of 13%. In this method, sodium hypochlorite pentahydrate is prepared into an aqueous solution without being particularly dried. Patent Document 4 describes a method of producing sodium hypochlorite pentahydrate crystals having a reduced content of sodium chlorate.

[Prior Art Documents]

[Patent Documents]

[Patent Document 1] JP-S45(1970)-037134B
[Patent Document 2] JP-S49(1974)-028354B
[Patent Document 3] JP2000-290003A
[Patent Document 4] JP2014-169215A

[Non-Patent Documents]

[Non-Patent Document 1] Arihiro Hamano, "Jiaensosansoda Kesshou no Bunkaisokudo (Decomposition Rate of Sodium Hypochlorite Crystals)," Research Reports of National Institute of Technology, Sasebo College, Vol. 7, pp 131-138, September 2, 1970

[SUMMARY OF THE INVENTION]

[Problems to be Solved by the Invention]

The methods described in Patent Documents 1 and 2 have, for example, a problem that sodium hypochlorite crystals are decomposed depending on the drying conditions and thus, conventionally, there is no known method in which sodium hypochlorite crystals are dried industrially and stably to a sufficiently low moisture concentration to make it possible to obtain sodium hypochlorite pentahydrate crystal powder that is excellent in storage stability.
In order to solve the conventional problem described above, the present invention provides a production method for sodium hypochlorite pentahydrate crystal powder, in which sodium hypochlorite pentahydrate crystal powder having good storage stability at room temperature can be obtained, sodium hypochlorite pentahydrate crystal powder, and an aqueous solution of sodium hypochlorite using the same.

[Means for Solving the Problem]

The present invention relates to a production method for sodium hypochlorite pentahydrate crystal powder, the method comprising: drying wet sodium hypochlorite pentahydrate crystals with a gas until the moisture content of the crystals reaches 2.5% by weight or lower, wherein the gas has a temperature of less than 25°C, a dew point of -2°C or lower, and a carbon dioxide concentration of 250 ppm to 1600 ppm, and wherein the wet sodium hypochlorite pentahydrate crystals have a sodium hydroxide concentration of 0.01% by weight or higher.
Preferably, the drying is carried out under normal pressure or reduced pressure. Preferably, the sodium hypochlorite pentahydrate crystal powder has a higher effective chlorine concentration than that of the wet sodium hypochlorite pentahydrate crystals. Furthermore, an aqueous sodium hydroxide solution is reacted with chlorine gas, sodium chloride is filtered out from the reaction solution to obtain an aqueous solution of sodium hypochlorite, from which sodium hypochlorite pentahydrate crystals are crystalized, and thus the wet sodium hypochlorite pentahydrate crystals are obtained. It is preferable that before the sodium hypochlorite pentahydrate crystals are crystalized, sodium hydroxide be added to the aqueous solution of sodium hypochlorite so as to have a molar fraction in the range of 0.01 to 0.26 with respect to the sodium hypochlorite.
Furthermore, the present invention relates to a sodium hypochlorite pentahydrate crystal powder, the powder comprising sodium carbonate, wherein the sodium carbonate is present on surfaces of the sodium hypochlorite pentahydrate crystals, and wherein the powder has a sodium carbonate concentration of 0.1% by weight or more and a moisture content between crystals of 2.5% by weight or less.
Preferably, the sodium hypochlorite pentahydrate crystal powder has an angle of repose of 40° or less. Preferably, the sodium hypochlorite pentahydrate crystal powder has a loose apparent density of 0.60 g/mL or more as measured according to JIS K 7365 (1999). Preferably, the sodium hypochlorite pentahydrate crystal powder has an effective chlorine concentration of 41% by weight or more.
Moreover, the present invention relates to an aqueous solution of sodium hypochlorite, the aqueous solution being obtained using the sodium hypochlorite pentahydrate crystal powder described above.

[Effects of the Invention]

According to the production method of the present invention, drying carried out under predetermined conditions in the production process for sodium hypochlorite pentahydrate crystal powder makes it possible to provide sodium hypochlorite pentahydrate crystal powder having good storage stability at room temperature. Furthermore, since the present invention provides sodium hypochlorite pentahydrate crystal powder that is stable in the crystalline form, it is convenient for transportation and a user also can optionally use it in the form of an aqueous solution containing the powder dissolved at a high concentration.

[Description of Preferred Embodiments]

The present inventors conducted intensive studies on obtaining a solid sodium hypochlorite pentahydrate crystal powder excellent in storage stability and as a result, found that when wet sodium hypochlorite pentahydrate crystals were dried in the presence of sodium hydroxide, with the drying temperature, dew point of a gas used for drying, and carbon dioxide concentration thereof being adjusted in predetermined ranges, sodium hypochlorite pentahydrate crystal powder having good storage stability at room temperature was obtained, which resulted in the present invention.

The production method for sodium hypochlorite pentahydrate crystal powder of the present invention includes a drying step for drying wet sodium hypochlorite pentahydrate crystals containing sodium hydroxide at a concentration of 0.01% by weight or higher using a gas having a temperature of less than 25°C, a dew point of -2°C or lower, and a carbon dioxide concentration of 250 ppm to 1600 ppm until the moisture content between crystals becomes 2.5% by weight or lower.

In the present invention, the "moisture content between crystals" refers to the content of water other than hydrated water contained in the surfaces and/or inside of sodium hypochlorite pentahydrate crystals. The moisture content between crystals is measured and calculated by the method described later. In the present invention, the "wet sodium hypochlorite pentahydrate crystals" are those having a moisture content between crystals of more than 2.5% by weight. The wet sodium hypochlorite pentahydrate crystals (hereinafter, also referred to as "wet crystals") to be subjected to the drying step in the production method of the present invention are not particularly limited as long as they are those having a moisture content between crystals of more than 2.5% by weight. For example, they may be those obtained by reacting an aqueous sodium hydroxide solution with chlorine gas, filtering out sodium chloride to obtain an aqueous solution of sodium hypochlorite, from which sodium hypochlorite pentahydrate crystals are crystalized, which then is subjected to solid-liquid separation, or they may be those obtained by further dehydrating them after solid-liquid separation as described later. For example, specifically, an aqueous sodium hydroxide solution is reacted with chlorine gas to obtain a reaction product, from which sodium chloride is solid-liquid separated to obtain an aqueous solution of sodium hypochlorite, seed crystals are added thereto to precipitate sodium hypochlorite pentahydrate crystals, and thereafter the remaining aqueous solution of sodium hypochlorite is subjected to solid-liquid separation to obtain sodium hypochlorite pentahydrate crystals, which can be used. Furthermore, the wet crystals described above may be produced by the method described in JP2014-169215A.

In the production method of the present invention, the moisture content between crystals of the wet sodium hypochlorite pentahydrate crystals to be subjected to the drying step is preferably 3% by weight or more. Furthermore, the upper limit of the moisture content between crystals of the wet sodium hypochlorite pentahydrate crystals before drying is not particularly limited. However, from the viewpoint of reducing impurities originating from the filtrate present between crystals, the moisture content between crystals is preferably 10% by weight or less, more preferably 8% by weight or less, and further preferably 6% by weight or less. On the other hand, from the viewpoint of shortening the drying time, it is preferably 15% by weight or less. If necessary, after solid-liquid separation, dehydration operation can be carried out as described later to reduce the moisture content between crystals of the wet sodium hypochlorite pentahydrate crystals.

In the production method of the present invention, it is important to carry out drying, with sodium hydroxide being allowed to coexist in the wet sodium hypochlorite pentahydrate crystals so as to have a concentration of 0.01% by weight or more. In order to achieve it, before the drying step, sodium hydroxide may be added to the wet sodium hypochlorite pentahydrate crystals so as to have a predetermined concentration, but in the case of using sodium hypochlorite pentahydrate crystals obtained by reacting an aqueous sodium hydroxide solution with chlorine gas, filtering out sodium chloride, and crystalizing the resultant solution, it is preferable to add sodium hydroxide to an aqueous solution of sodium hypochlorite or a slurry of sodium hypochlorite pentahydrate crystals before or after the crystallization step or during crystallization, as described later to allow sodium hydroxide to coexist at the time of drying. The sodium hydroxide concentration in the wet sodium hypochlorite pentahydrate crystals mentioned herein is indicated in % by weight relative to the total weight of the wet crystals to be dried, that is, the total weight of sodium hypochlorite pentahydrate, water, and other components contained in the wet crystals. The concentration of sodium hydroxide in the wet sodium hypochlorite pentahydrate crystals is preferably 0.04% by weight or more, more preferably 0.08% by weight or more. The upper limit thereof is not particularly limited. Even if it is 1% by weight or less, the effect of the present invention can be sufficiently obtained, and it may be 0.5% by weight or less.

In the present invention, from the viewpoint of effectively preventing the sodium hypochlorite pentahydrate crystals from melting in the drying step, the drying temperature needs to be lower than 25°C and is preferably 24°C or lower. Furthermore, it is more preferable to set the drying temperature at 20°C or lower since the decomposition of sodium hypochlorite pentahydrate crystals can be effectively prevented in the drying step and the effective chlorine concentration of the sodium hypochlorite pentahydrate crystals after drying can be 41% by weight or more. In addition, it is further preferable that the drying temperature be 15°C or lower, since the moisture content between crystals can be effectively reduced while evaporation of hydrated water is suppressed.

In the present invention, wet sodium hypochlorite pentahydrate crystals are dried until the moisture content between crystals becomes 2.5% by weight or lower and thereby sodium hypochlorite pentahydrate crystal powder is obtained. When the moisture content between crystals of the sodium hypochlorite pentahydrate crystal powder obtained after drying (hereinafter also referred to as dried crystals) exceeds 2.5% by weight, it is not completely dried and thereby the sodium hypochlorite pentahydrate crystal powder has a low powder fluidity and in addition, the effective chlorine concentration of sodium hypochlorite tends to decrease due to reaction with carbon dioxide. The moisture content between crystals of the sodium hypochlorite pentahydrate crystal powder after drying is preferably 1.0% by weight or less, preferably 0.90% by weight or less, further preferably 0.85% by weight or less, and further more preferably 0.80% by weight or less.

The lower limit of the moisture content between crystals of the sodium hypochlorite pentahydrate crystals after drying is not particularly limited. However, it is desirable to complete the drying treatment during the constant rate drying period, during which the moisture between crystals of the sodium hypochlorite pentahydrate crystals is removed in the drying step, and from the viewpoint of preventing hydrated water from evaporating in the drying step, the moisture content between crystals is preferably 0.01% by weight or more, more preferably 0.02% by weight or more, further preferably 0.05% by weight or more, and further more preferably 0.1% by weight or more.

In the production method of the present invention, drying is carried out using a gas having a dew point of -2°C or lower and a carbon dioxide concentration of 250 ppm to 1600 ppm.

The dew point of the gas used for drying is not particularly limited as long as it is -2°C or lower, but it is preferably -10°C or lower, further preferably -20°C or lower, more preferably -25°C or lower, and further more preferably -30°C or lower. For example, when the dew point of the gas used for drying is -20°C or lower, even if the temperature of said gas fluctuates, the humidity in the gas is sufficiently low and therefore the drying time can be shortened. Furthermore, when the dew point of the gas used for drying is -30°C or lower, a moisture content between crystals of 2.5% by weight or lower can be obtained without increasing the content of sodium chloride or sodium chlorate due to the decomposition of sodium hypochlorite pentahydrate during the drying operation. In the present invention, the dew point generally means the dew point temperature obtained when the gas used for drying is at 1 atm and is measured using a common dew point measuring apparatus. If, for example, the gas is not air or a gas having a composition similar to that of air and therefore the dew point of the gas used for drying cannot be measured with a common dew point measuring apparatus, it is also possible that the amount of water vapor in the gas used for drying is measured by another known means and then calculation or extrapolation is performed to determine the dew point temperature.

Since it is known conventionally that sodium hypochlorite pentahydrate crystals are decomposed by carbon dioxide (Non-Patent Document 1), it has been considered preferable to reduce the concentration of carbon dioxide as much as possible also during drying. However, in the present invention, the carbon dioxide concentration in the gas used for drying is set to 250 ppm or more. Surprisingly, in the present invention, a gas containing 250 ppm or more of carbon dioxide is used for drying, with sodium hydroxide coexisting in wet sodium hypochlorite pentahydrate crystals, thereby the sodium hydroxide contained in the moisture between wet crystals of sodium hypochlorite pentahydrate comes into contact with the diffused carbon dioxide contained in the gas used for drying before the drying is completed, and thus sodium carbonate is produced and the sodium carbonate thus produced is present on (adheres to) the surfaces of sodium hypochlorite pentahydrate crystals, which results in an improvement in the storage stability of the sodium hypochlorite pentahydrate crystals after drying.

Although the carbon dioxide concentration in the gas used for drying depends also on the relationship with the amount of sodium hydroxide contained in the moisture between wet crystals of sodium hypochlorite pentahydrate, it is preferably 300 ppm or more, more preferably 350 ppm or more, further preferably 420 ppm or more, and further more preferably 600 ppm or more. It is particularly preferable that the carbon dioxide concentration in the gas used for drying be 600 ppm or more since further increasing the concentration of sodium hydroxide coexisting with the wet sodium hypochlorite pentahydrate crystals to, for example, 0.1% by weight or more results in an increase in the amount of the sodium carbonate present (for example, present as a coating) on the surfaces of sodium hypochlorite pentahydrate crystals after drying and thereby the storage stability of dried crystals is considerably improved. On the other hand, the upper limit of the carbon dioxide concentration in the gas used for drying is not particularly limited as long as it is 1600 ppm or less, but from the viewpoint of avoiding decomposition of sodium hypochlorite by carbon dioxide, it is preferably 1500 ppm or less, more preferably 1000 ppm or less. In the present invention, the carbon dioxide concentration can be measured with a common carbon dioxide sensor. In addition, some carbon dioxide sensors can measure not only carbon dioxide concentration but also temperature and dew point. They can also be used.

The drying can be carried out under normal pressure or reduced pressure. From the viewpoint of uniformly drying the sodium hypochlorite pentahydrate crystals, it is preferable to dry them while stirring or flowing. The drying method is not particularly limited and examples of the method that can be used include a batch drying method in which said crystals are spread, for example, on a tray and dehumidified dry air is blown to dry them, a spray drying method in which a slurry containing crystals is sprayed with a two-fluid nozzle or a high-speed centrifugal machine and is dried in dehumidified air, a flash drying method in which said crystals are transported little by little together with dehumidified air, and a fluidized drying method in which the crystals are dried while dehumidified air is blown from the lower part of the crystals to allow them to flow. In the present invention, the normal pressure means a pressure equal to atmospheric pressure. The drying may be carried out under reduced pressure (under vacuum). Drying under reduced pressure is preferable since the moisture between crystals can be evaporated due to reduced pressure without heating and evaporation heat is deprived, which results in preventing decomposition and melting of the crystals from being accelerated. From the viewpoint of evaporating the moisture between crystals at ambient temperature, the degree of pressure reduction (degree of vacuum) is preferably 2 kPa (abs) or lower, more preferably 1 kPa (abs) or lower. The drying under reduced pressure may be vacuum freeze drying. The degree of vacuum in vacuum freeze drying is not particularly limited, but from the viewpoint of efficiently reducing the moisture content between crystals without reducing hydrated water, it is preferably 300 Pa (abs) or lower, more preferably 200 Pa (abs) or lower, and further preferably 100 Pa (abs) or lower. In drying under reduced pressure and vacuum freeze drying, the dew point of the gas used for drying is preferably -42°C or lower. Drying can be carried out under normal pressure or reduced pressure also in producing a hydrate or anhydrate of sodium hypochlorite other than sodium hypochlorite pentahydrate but, for example, from the viewpoint of suppressing decomposition and melting of crystals, it is preferable to carry out the drying under reduced pressure. Examples of the hydrate of sodium hypochlorite other than sodium hypochlorite pentahydrate crystals include monohydrate, 2.5 hydrate, hexahydrate, and heptahydrate.

The gas to be used for the drying is not particularly limited as long as it contains carbon dioxide at a predetermined concentration and satisfies the temperature condition and the dew point condition. For example, the carbon dioxide concentration is adjusted as necessary and dehumidified air with reduced humidity can be used. The dehumidified air can also be obtained, for example, by passing air through a column packed with a dehumidifying agent such as molecular sieve 4A or silica gel. Furthermore, compressed air that has been drained or cool dehumidified air with a humidity reduced at low temperature may be used. The compressed air can be substituted with instrument air, and it can be used, wherever instrumentation devices are used, without additionally introducing facilities for dehumidified air to be used for drying. Moreover, if necessary, a carbon dioxide gas cylinder or a carbon dioxide generator using PSA (a pressure fluctuation adsorption method) can be connected to adjust the carbon dioxide concentration. Furthermore, an inert gas such as nitrogen or argon mixed with carbon dioxide at a predetermined concentration may be used.

From the viewpoint that the drying step does not reduce the purity of sodium hypochlorite pentahydrate crystals, the sodium hypochlorite pentahydrate crystals after drying (sodium hypochlorite pentahydrate crystal powder) have preferably a higher effective chlorine concentration than that of the sodium hypochlorite pentahydrate crystals before drying (wet sodium hypochlorite pentahydrate crystals). The effective chlorine concentration of the sodium hypochlorite pentahydrate crystal powder is preferably 41% by weight or more, particularly preferably 42% by weight or more. In the present invention, the "effective chlorine concentration" is measured and calculated as described later.

In the present invention, it is preferable to use, as wet sodium hypochlorite pentahydrate crystals to be dried, crystals obtained by reacting an aqueous sodium hydroxide solution with chlorine gas, filtering out sodium chloride from the reaction solution to obtain an aqueous solution of sodium hypochlorite, and crystallizing sodium hypochlorite pentahydrate crystals, since adding sodium hydroxide to an aqueous solution of sodium hypochlorite or a slurry of sodium hypochlorite pentahydrate crystals before or during the crystallization of the sodium hypochlorite pentahydrate crystals or after completion of the crystallization allows sodium hypochlorite pentahydrate crystals and sodium hydroxide to coexist in drying. In order to allow sodium hydroxide to evenly adhere to the surfaces of sodium hypochlorite pentahydrate crystals, it is more preferable to add sodium hydroxide before crystallization, for example, before adding seed crystals to an aqueous solution of sodium hypochlorite (pre-crystallization solution). Furthermore, in this case, preferably sodium hydroxide is added in such a manner that the amount thereof is in the range of 0.01 to 0.26 molar fraction with respect to sodium hypochlorite in the aqueous solution of sodium hypochlorite before crystallization. In the present specification, in the case of adding sodium hydroxide to an aqueous solution of sodium hypochlorite, the term "molar fraction of sodium hydroxide with respect to sodium hypochlorite" means the ratio of the mole number of sodium hydroxide to the total mole number of the mole number of sodium hypochlorite and the mole number of sodium hydroxide. It is preferable to adjust the concentration of sodium hydroxide in the aqueous solution of sodium hypochlorite in the above-mentioned range, since sodium hydroxide can be efficiently distributed to the vicinity of the surfaces of the sodium hypochlorite pentahydrate crystals after crystallization, and sodium hydroxide contained in the moisture between wet crystals of sodium hypochlorite pentahydrate reacts with carbon dioxide to produce sodium carbonate in the drying step. From the viewpoint of further improving the storage stability of crystals to be obtained, the molar fraction of sodium hydroxide to be added to sodium hypochlorite is more preferably 0.03 or more and further preferably 0.08 or more. The upper limit of the molar fraction of sodium hydroxide to be added to sodium hypochlorite is not limited as long as in relation to the concentration of carbon dioxide in the gas used in drying, sodium hydroxide remains on the surface of sodium hypochlorite pentahydrate after completion of drying and the storage stability is not reduced significantly, and for example, it is preferably 0.2 or less, more preferably 0.16 or less. Furthermore, it is preferable that sodium hydroxide be added as an aqueous solution, and the concentration of the aqueous sodium hydroxide solution used in this case is preferably 45% by weight or more.

In the reaction step of reacting an aqueous sodium hydroxide solution with chlorine gas to obtain an aqueous solution of sodium hypochlorite, it is preferable to use 32 to 38% by weight of aqueous sodium hydroxide solution. Within this range, the production rate of sodium hypochlorite by the chlorination reaction can be kept high and the production of sodium chlorate due to the disproportionation reaction can be controlled to be extremely low. In order to suppress the production of sodium bicarbonate that promotes the decomposition of sodium hypochlorite pentahydrate crystals, it is preferable to restrict the contact of the aqueous sodium hydroxide solution with the atmosphere as much as possible, and it is more preferable to also carry out the chlorination reaction in a system free from contact with the atmosphere. The reaction temperature in the reaction step described above is not particularly limited but it is preferably 22 to 26°C. Within this range, the chlorination reaction proceeds smoothly and the production of sodium chlorate accompanying the disproportionation reaction can be significantly suppressed.

Sodium chloride is solid-liquid separated from the aqueous solution of sodium hypochlorite obtained by the above-mentioned reaction and then the resultant solution is used for crystallization. The aqueous solution of sodium hypochlorite produced by the chlorination reaction described above contains by-produced sodium chloride crystals. In the above, the solid-liquid separation is not particularly limited but it can be performed, for example, by centrifugal separation using a centrifugal separator.

An aqueous solution of sodium hypochlorite (pre-crystallization solution) obtained after sodium chloride is filtered out is introduced into a crystallizer to be crystallized. The effective chlorine concentration in the pre-crystallization solution is preferably 20% by weight or more and from the viewpoint of the efficiency of crystallization, it is more preferably 23% by weight or more and further preferably 26% by weight or more. A small amount of seed crystals can be used for the purpose of increasing the crystallization rate. As a condition for adding the seed crystals, it is preferable to add them to the pre-crystallization solution set at a cooling start temperature at which sodium hypochlorite pentahydrate or sodium chlorate does not precipitate even when the seed crystals are added to the pre-crystallization solution. Specifically, it is preferable to add seed crystals when the cooling start temperature (the temperature of the pre-crystallization solution) is 15 to 25°C. At this temperature, even if the seed crystals are added to the aqueous solution of sodium hypochlorite, sodium hypochlorite pentahydrate or sodium chlorate does not precipitate, decomposition of sodium hypochlorite pentahydrate due to excessive crystallization heat generation can be suppressed, and the by-production of excess sodium chloride can be suppressed. Considering that the seed crystals dissolve before crystallization, the cooling start temperature at which the seed crystals are added is preferably 16 to 23°C, more preferably 17 to 20°C.

Preferably, the crystallization is not carried out at a constant temperature but is carried out while cooling is performed at a constant cooling rate. The cooling rate is preferably 1 to 20°C/hr, more preferably 2 to 15°C/hr, and further preferably 3 to 10°C/hr. In the stirring at the time of crystallization, the tip speed of a stirring blade is preferably 0.2 to 3 m/s, more preferably 0.3 to 2 m/s.

The temperature (cooling end temperature) to be finally reached in the crystallization step is preferably a temperature at which sodium hypochlorite pentahydrate precipitates and sodium chloride does not precipitate. Specifically, the temperature (cooling end temperature) to be finally reached in the crystallization step is preferably 0 to 12°C, more preferably 2 to 10°C, and further preferably 3 to 7°C.

The solid-liquid separation operation of the slurry containing sodium hypochlorite pentahydrate crystals obtained in the crystallization step is not particularly limited and, for example, a suction filtration method, a pressure filtration method, a filter press method, or a centrifugal separation method can be used. Treatment using a device such as a centrifugal separator allows solid-liquid separation of a sodium hypochlorite solution from sodium hypochlorite pentahydrate crystals to obtain wet sodium hypochlorite pentahydrate crystals. After the solid-liquid separation of the sodium hypochlorite solution from the sodium hypochlorite pentahydrate crystals, the sodium hypochlorite pentahydrate crystals that were filtered out may be further dehydrated with, for example, a centrifugal separator. Dehydration can reduce the moisture content between crystals of the wet sodium hypochlorite pentahydrate crystals. Furthermore, in order to reduce residual alkali content and sodium chloride adhering between the crystals in the dehydrated sodium hypochlorite pentahydrate crystals, it is also possible to add pure water thereto to such an extent that the crystals are not completely dissolved, for example, in an amount of around 10% by weight with respect to the weight of the wet crystals and then carry out the dehydration operation. Furthermore, in order to adjust the pH of the sodium hypochlorite pentahydrate crystals, it is also possible to add an aqueous solution of, for example, phosphoric acid to such an extent that the crystals are not completely dissolved, for example, in an amount of around 10% by weight with respect to the weight of the wet crystals and then carry out the dehydration operation.

In the sodium hypochlorite pentahydrate crystal powder of the present invention, sodium carbonate is present on the surface of the sodium hypochlorite pentahydrate crystal powder, and the concentration of said sodium carbonate is 0.1% by weight or more and the moisture content between crystals is 2.5% by weight or less. That is, in the sodium hypochlorite pentahydrate crystal powder of the present invention, sodium carbonate is compounded with the sodium hypochlorite pentahydrate crystal powder. The sodium hypochlorite pentahydrate crystal powder of the present invention is obtained preferably by the production method of the present invention described above. As is apparent from the production method of the present invention described above, in the sodium hypochlorite pentahydrate crystal powder obtained by the production method of the present invention, sodium carbonate is present on the surface of sodium hypochlorite pentahydrate crystals and is compounded with the sodium hypochlorite pentahydrate crystals. Furthermore, in the sodium hypochlorite pentahydrate crystal powder of the present invention, for example, a dry particle compounding apparatus may be used to cover the surfaces of sodium hypochlorite pentahydrate crystals with sodium carbonate to compound them.

The sodium hypochlorite pentahydrate crystal powder of the present invention is not only excellent in properties such as fluidity due to the low moisture content thereof but also excellent in storage stability because of the presence of sodium carbonate on the crystal surfaces. The form of sodium carbonate present in the sodium hypochlorite pentahydrate crystal powder of the present invention is not particularly limited and the entire crystal surface may not necessarily be uniformly covered as long as at least part of the crystal surface, preferably 30% or more of the surface area, more preferably 50% or more of the surface area, is covered. However, as a matter of course, it is most preferable that the entire crystal surface be covered. At the time of filing the present application, it is difficult to confirm the form of sodium carbonate present on the surfaces of sodium hypochlorite pentahydrate crystals due to the properties of the compound of sodium hypochlorite and sodium carbonate. However, in the case where sodium hypochlorite pentahydrate crystals are produced by the above-mentioned production method of the present invention, as described above, drying is carried out using a gas containing 250 ppm or more of carbon dioxide, with sodium hydroxide coexisting with wet sodium hypochlorite pentahydrate crystals, so that before completion of drying, the sodium hydroxide contained in the moisture between wet crystals of sodium hypochlorite pentahydrate comes into contact with the diffused carbon dioxide contained in the gas used for drying. As a result, sodium carbonate is produced and thereby the sodium carbonate thus produced adheres to the surfaces of the sodium hypochlorite pentahydrate crystals and exists, for example, as a coating, which is obvious. Furthermore, also in the case of using a dry particle compounding apparatus, the surfaces of sodium hypochlorite pentahydrate crystals are covered with sodium carbonate and thereby they are compounded. Therefore, the sodium carbonate adheres to the surfaces of sodium hypochlorite pentahydrate crystals and exists, for example, as a coating, which is obvious. Patent Document 1 describes that anhydrous sodium carbonate is added to and mixed with dry sodium hypochlorite crystals, but anhydrous sodium carbonate is simply mixed with dry sodium hypochlorite crystals. In the crystal powder of sodium hypochlorite pentahydrate of the present invention, sodium carbonate is present on the surfaces of the crystals of sodium hypochlorite pentahydrate and is compounded with the crystals of sodium hypochlorite pentahydrate, which seems to result in better storage stability. That is, in the crystal powder of sodium hypochlorite pentahydrate of the present invention, the concentration of the sodium carbonate present on the surfaces of the crystals of sodium hypochlorite pentahydrate needs to be 0.1% by weight or more and thereby the storage stability is improved. In the crystal powder of sodium hypochlorite pentahydrate of the present invention, for example, even when sodium carbonate is added and mixed after crystallization of the sodium hypochlorite pentahydrate crystals, the concentration of the sodium carbonate present on the surfaces of the crystals of sodium hypochlorite pentahydrate except for the sodium carbonate added and mixed after crystallization of the sodium hypochlorite pentahydrate crystals may be 0.1% by weight or more.

In the sodium hypochlorite pentahydrate crystal powder, from the viewpoint of being excellent in storage stability, the concentration of the sodium carbonate is preferably 0.2% by weight or more, more preferably 0.3% by weight or more. Furthermore, in the sodium hypochlorite pentahydrate crystal powder, from the viewpoint of a decrease in solubility in water and a decrease in reactivity of, for example, an oxidizing agent, the concentration of the sodium carbonate is preferably 3.0% by weight or less, more preferably 2.0% by weight or less, further preferably 1.5% by weight or less, further more preferably less than 1.0% by weight, and still more preferably 0.95% by weight or less. The concentration of the sodium carbonate in the sodium hypochlorite pentahydrate crystal powder is measured as described later. Specifically, in the sodium hypochlorite pentahydrate crystal powder, the concentration of the sodium carbonate is preferably 0.1% by weight to 3.0% by weight, more preferably 0.1% by weight to 2.0% by weight.

The sodium hypochlorite pentahydrate crystal powder has an angle of repose of preferably 40° or less, more preferably 38° or less, further preferably 35° or less, further more preferably 30° or less, and particularly preferably 25° or less. When the sodium hypochlorite pentahydrate crystal powder has an angle of repose of 40° or less, the crystals have improved storage stability, air transfer becomes possible, and the product can be taken out easily. In the present invention, the angle of repose is calculated as follows: sodium hypochlorite pentahydrate crystal powder is allowed to fall freely through a powder funnel (model number "6-858-05", mouth diameter: 150 mm) manufactured by AS ONE Corporation onto a disk having a diameter of 5.5 cm, the height of the top portion of the crystal powder thus heaped is measured, and the angle of elevation from the disk surface to the top portion is calculated as an angle of repose by a trigonometric function.

The sodium hypochlorite pentahydrate crystal powder has a loose apparent density of preferably 0.60 g/mL or more, more preferably 0.63 g/mL or more, as measured according to JIS K 7365 (1999). For example, in the production method of the present invention described above, in the step of drying wet sodium hypochlorite pentahydrate crystals, the loose apparent density increases during the constant rate drying period and reaches 0.63 g/mL or more during the falling rate drying period. Therefore, it can also be used as a criterion for determining the completion of drying. Furthermore, when the powder has a loose apparent density of 0.63 g/mL or more, it has good powder fluidity and thereby can be easily air-transferred and also weighed automatically. In the present invention, the "loose apparent density" is measured according to JIS K 7365 (1999). Specifically, an apparent density measuring device specified in JIS K 7365 (1999) is used, said device is filled with sodium hypochlorite pentahydrate crystal powder, the damper is pulled out quickly to allow the powder to fall freely and to be received in a weighing bottle (inner volume: 100 mL), a flat plate is slid to allow the crystal powder heaped from the weighing bottle to fall without applying vibration shock to the weighing bottle, then it is weighed three times, the empty weight of the weighing bottle is subtracted from the average of the three measurement results, the weight thus obtained is divided by an inner volume of 100 mL, and thus the loose apparent density is obtained.

The sodium hypochlorite pentahydrate crystal powder is excellent in storage stability at room temperature. For example, the storage stability time at 23°C is preferably 100 hours or more, more preferably 150 hours or more. From the relationship between storage temperature and storage stability time, it has been found that when the storage stability time is 100 hours or more at 23°C, a storage stability time of approximately one year can be obtained under a refrigerated storage condition at 5°C or lower. That is, the sodium hypochlorite pentahydrate crystal powder of the present invention has good storage stability at room temperature and excellent long-term storage stability at a low temperature of 5°C or lower. The storage stability of the sodium hypochlorite pentahydrate crystal powder at room temperature is evaluated as described later.

The sodium hypochlorite pentahydrate crystal powder can be dissolved in water to be used as an aqueous solution of sodium hypochlorite. The aqueous solution of sodium hypochlorite is not particularly limited and may be produced in such a manner that, for example, the effective chlorine concentration becomes as low as 4% by mass to 12% by weight or as high as more than 12% by weight, for example, 13% by weight or more.

[Examples]

Hereinafter, the present invention is described further specifically with reference to examples. It should be noted that the present invention is not limited to the following examples.

<Sample Preparation>

(1) Preparation of Sample 1

10 g of each of the sodium hypochlorite pentahydrate crystals before drying (wet sodium hypochlorite pentahydrate crystals) and the sodium hypochlorite pentahydrate crystals after drying (sodium hypochlorite pentahydrate crystal powder), which were subjected to measurement, was weighed exactly to be placed in a conical beaker and dissolved in 20 g of water to produce an aqueous solution of sodium hypochlorite (Sample 1).

(2) Preparation of Sample 2

10 mL of Sample 1 obtained above was collected with a transfer pipette and placed in a 250-mL measuring flask, and then pure water was added thereto to obtain a 25-fold diluted aqueous solution (Sample 2).

(3) Preparation of Sample 3

20 to 30 mL of pure water was placed in a 100-mL measuring flask, 2 mL of Sample 1 was collected with a micropipette to be added to said measuring flask. Approximately 10 mL of a 3% by weight aqueous hydrogen peroxide solution was added thereto. After it was visually confirmed that bubbles resulted from decomposition of sodium hypochlorite stopped being produced, pure water was added up to the marked line, which then was mixed well (Sample 3).

<Specific Gravity>

At room temperature (23°C), exactly 25 mL of Sample 1 was placed in a conical beaker with a transfer pipette, and the weight X g of its content (Sample 1) was exactly weighed. The specific gravity of the aqueous solution of sodium hypochlorite was calculated using the following numerical formula 1.

$$SG\ (g/mL) = X\ (g)/25\ (mL) \quad (1)$$

In the numerical formula (1) above, SG denotes the specific gravity (g/mL) of the aqueous solution of sodium hypochlorite.

<Effective Chlorine Concentration>

Exactly 10 mL of Sample 2 was placed in a beaker, and 25 mL of an aqueous solution of 10% by weight potassium iodide and 25 mL of an aqueous solution of 10% by weight acetic acid were added thereto. The solution thus obtained was titrated with a 1/10 N aqueous sodium thiosulfate solution. When the color of the solution changed from brown to pale yellow, about three drops (approximately 0.05 mL) of an aqueous starch solution (approximately 0.5% by weight) were added thereto as an indicator and titration was further continued with a 1/10 N aqueous sodium thiosulfate solution until the color of the solution changed from brown to colorless. The titer of the 1/10 N aqueous sodium thiosulfate solution used for titration was indicated as A mL. The following numerical formula 2 was used to calculate the effective chlorine concentration in the sodium hypochlorite pentahydrate crystals.

$$ECC\ (\% \text{ by weight}) = [(35.45 \times 0.1 \times A / 0.4 \times (10 + 20) / SG) / 1000] / 10 \times 100 \quad (2)$$

In the above numerical formula (2), ECC denotes the effective chlorine concentration in the sodium hypochlorite pentahydrate crystals.

<Sodium Hydroxide Concentration and Sodium Carbonate Concentration>

Exactly 25 mL of Sample 1 was placed in a beaker and an aqueous solution of 3% by weight hydrogen peroxide was gradually added thereto. When the generation of oxygen gas by the reaction stopped, the addition of the aqueous solution of 3% by weight hydrogen peroxide was stopped. After this was shaken well, two drops (approximately 0.03 mL) of a phenolphthalein solution were added thereto and titration was carried out with a 1/10 N aqueous sulfuric acid solution until the red color disappeared. The amount of the 1/10 N aqueous sulfuric acid solution required in this case was indicated as B mL. Subsequently, two drops (approximately 0.03 mL) of a methyl orange solution were added, and titration was carried out with a 1/10 N aqueous sulfuric acid solution until it turned pale pink. The amount of the 1/10 N aqueous sulfuric acid solution required in this case was indicated as C mL. The concentration of sodium hydroxide and the concentration of sodium carbonate in the sodium hypochlorite pentahydrate crystals were determined by the following numerical formulae (3) and (4).

$$\text{Concentration of Sodium Hydroxide (\% by weight)} = 40 \times 0.1 \times (B - C) / 25 \times (10 + 20) / SG \quad (3)$$

$$\text{Concentration of Sodium Carbonate (\% by weight)} = 53 \times 0.1 \times 2 \times C / 25 \times (10 + 20) / SG \quad (4)$$

In the numerical formulae (3) and (4), SG denotes the specific gravity (g/mL) of the aqueous solution of sodium hypochlorite.

<Concentration of Sodium Chloride>

Exactly 10 mL of Sample 2 was placed in a beaker and 5 mL of an aqueous solution of 3% by weight hydrogen peroxide was added thereto. After this was shaken well, two drops (approximately 0.03 mL) of a phenolphthalein solution were added thereto and titration was carried out with a 1/10 N aqueous sulfuric acid solution until the red color disappeared. Subsequently, three drops (approximately 0.05 mL) of a potassium chromate indicator were added thereto and titration was carried out with a 1/10 N aqueous silver nitrate solution until it turned yellow to brown. The amount of the 1/10 N aqueous silver nitrate solution require in this case was indicated as D mL. This was substituted in the following numerical formula 5 together with the specific gravity and the effective chlorine concentration determined above and thereby the concentration of sodium chloride in the sodium hypochlorite pentahydrate crystals was determined.

$$\text{Concentration of Sodium Chloride (\% by weight)} = [58.45 \times 0.1 \times D / 0.4 \times (10 + 20) / SG] - ECC \times 0.8234 \qquad (5)$$

In the numerical formula (5), SG denotes the specific gravity (g/mL) of the aqueous solution of sodium hypochlorite and ECC denotes the effective chlorine concentration (% by weight) in the sodium hypochlorite pentahydrate crystals.

<Sodium Chlorate Concentration>

20 mL of Sample 3 was passed through a chloride ion removal filter (product name "OnGuard II-Ag," manufactured by Thermo SCIENTIFIC), further passed through a metal ion removal filter (product name "OnGuard II-H," manufactured by Thermo SCIENTIFIC), and finally passed through a membrane filter (product name "IC MILLEX-LG," manufactured by Nihon Millipore) to remove chloride, metal ions, and insoluble matters, and thereafter this was analyzed using ion chromatography. The analytical instrument used herein was "ICS-1000 Ion Chromatography System" manufactured by Nippon Dionex Co., Ltd. Analytical conditions were as follows: separation column: IonPac AS9-HC, guard column: IonPac AG9-HC, suppressor: ASRS, recycle mode, current value: 45 mA, detector: electrical conductivity detector, eluent: 8 mmol/L $Na_2CO_3$ and 1 mmol/L NaOH, flow rate: 1 mL/min, and sample introduction amount: 25 $\mu$L. From the peak area ratio of the chromatograph thus obtained, the concentration (% by weight) of sodium chlorate was determined by a calibration curve method.

<Concentration of Sodium Hypochlorite Pentahydrate>

From the effective chlorine concentration determined above, the concentration of sodium hypochlorite pentahydrate was converted using the following numerical formula 6.

$$\text{Concentration of Sodium Hypochlorite Pentahydrate (\% by weight)} = ECC \times 164.45 / 70.91 \qquad (6)$$

In the numerical formula (6), ECC denotes the effective chlorine concentration (% by weight) in the sodium hypochlorite pentahydrate crystals.

<Moisture Content between Crystals>

The concentration of sodium hypochlorite pentahydrate, the concentration of sodium hydroxide, the concentration of sodium chloride, and the concentration of sodium chlorate, which were obtained above, were substituted into the following numerical formula 7 and thereby the moisture content between crystals excluding hydrated water was calculated. When the moisture content between crystals calculated by the following numerical formula 7 was a negative number, it was taken as "0".

$$\text{Moisture Content between Crystals (\% by weight)} = 100 - (W1 + W2 + W3 + W4 + W5) \qquad (7)$$

In the numerical formula (7), W1 is the concentration of sodium hypochlorite pentahydrate (% by weight), W2 is the concentration of sodium hydroxide (% by weight), W3 is the concentration of sodium carbonate (% by weight), W4 is the concentration of sodium chloride (% by weight), and W5 is the concentration of sodium chlorate (% by weight).

<Angle of Repose>

Dried sodium hypochlorite pentahydrate crystals were allowed to fall freely through a powder funnel (model number "6-858-05", mouth diameter: 150 mm) manufactured by AS ONE Corporation onto a disk having a diameter of 5.5 cm, the height of the top portion of the crystals thus heaped was measured, and the angle of elevation from the disk surface to the top portion was calculated as an angle of repose by a trigonometric function. This operation was carried out in a thermostatic chamber (room temperature: 23°C, relative humidity: 50%).

<Loose Apparent Density>

Loose apparent density was measured according to JIS K 7365 (1999). Specifically, an apparent density measuring device specified in JIS K 7365 (1999) was used, said device was filled with dried sodium hypochlorite pentahydrate crystals, the damper was pulled out quickly to allow the crystals to fall freely and to be received in a weighing bottle (inner volume: 100 mL), a flat plate was slid to allow the crystals heaped from the weighing bottle to fall without applying vibration shock to the weighing bottle, then it was weighed three times, the empty weight of the weighing bottle was subtracted from the average of the three measurement results, the weight thus obtained was divided by an inner volume of 100 mL, and thus the loose apparent density was obtained. This operation was carried out in a thermostatic chamber (room temperature: 23°C, relative humidity: 50%).

<Fluidity>

60 g of dried sodium hypochlorite pentahydrate crystals were placed in a powder funnel (model number "6-858-05", mouth diameter: 150 mm) manufactured by AS ONE Corporation. The time required for all the crystals to fall after the funnel opening, which had been blocked, was released was measured. Then, the fluidity was evaluated according to the three-stage criteria described below. This operation was carried out in a thermostatic chamber (room temperature: 23°C, relative humidity: 50%).

Good: All crystals fell within two minutes.
Slightly Poor: All crystals fell within five minutes when the side surface of the powder funnel manufactured by AS ONE Corporation was continuously struck with a spatula to cause vibration.
Poor: Crystals did not fall even when the side surface of the powder funnel manufactured by AS ONE Corporation was continuously struck with a spatula to cause vibration.

<Storage Stability>

10 g of dried sodium hypochlorite pentahydrate crystals were collected and placed in a 110-mL glass screw bottle (body diameter 40 mm $\Phi \times$ height 120 mm, with a screw cap). This was kept still and stored in a 23°C thermostatic chamber (dark place).
The state thereof was checked by continuous photographs taken every hour and visual observation and the time until it was confirmed by visual observation that the lower parts of the crystals were wet was taken as the storage stability time. Since it is known that when this state is reached, the effective chlorine concentration decreases by approximately 5% from that at the start, it can be determined that the quality is deteriorated.

[Example 1]

<Crystallization of Crystals>

Sodium chloride precipitated from 5 L of a reaction solution resulted from a reaction of an aqueous sodium hydroxide solution with chlorine gas was filtered out and thereby a filtrate (aqueous solution of sodium hypochlorite, effective chlorine concentration: approximately 28.5% by weight) was obtained. 3.5 L of the aqueous solution of sodium hypochlorite (17.8 mol of sodium hypochlorite) obtained after filtration was weighed and transferred to a titanium cylindrical container (diameter: 16 cm, height: 27 cm), and then 153 mL of a 48% by weight aqueous sodium hydroxide solution (2.7 mol of sodium hydroxide) was placed in the container to be added thereto. Thereafter, the cylindrical container containing the aqueous solution of sodium hypochlorite (pre-crystallization solution) placed therein was placed in a cooling tank of a cooling device (product name "PCC-1000," manufactured by EYELA, refrigerant: 30% by weight aqueous ethylene glycol solution). While stirring the aqueous solution of sodium hypochlorite with a stirrer (product name "MAZELA," manufactured by EYELA, stirring blade: anchor blade, 100 rpm), it was cooled until the temperature inside the cylindrical container reached 17°C. When the temperature stabilized, 1 g of seed crystals were placed therein, which then was cooled at a cooling rate of 6°C/hr until the temperature inside the cylindrical container reached 5°C, and thus crystallization was carried out. Stirring was stopped when the internal temperature of the cylindrical container reached 5°C, and a Büchner funnel (manufactured by FUNNEL Co., Ltd., outer diameter: 150 mm) with two glass filters (trade name "GA-100," manufactured by ADVANTEC, diameter: 125 mm) placed on top of each other was inserted into a suction filtration bottle (1000 mL, manufactured by Tokyo Glass Kikai Co.). The inside of the filtration bottle was suctioned with an aspirator and the solid-liquid mixture discharged from the crystallization vessel was added thereto, and then sodium hypochlorite pentahydrate crystals were filtered out.

<Dehydration Step>

Approximately 150 mL of the sodium hypochlorite pentahydrate crystals thus filtered out were placed on the filter cloth of a centrifugal dehydration device (small centrifugal separator H-112, manufactured by KOKUSAN Co., Ltd.) and dehydrated at 4000 rpm for ten minutes. Thus, dehydrated crystals were obtained.

<Drying Step>

100 g of dehydrated crystals were placed in a Sepa-rohto (trade name "Sepa-rohto 55Z," manufactured by Kiriyama Glass Works Co.) and air having the temperature, dew point, and carbon dioxide concentration that are shown in Table 1 below was introduced from the lower part. While a resin spatula was used to stir the whole dehydrated crystals contained inside every five minutes, drying was carried out for 60 minutes to obtain sodium hypochlorite pentahydrate crystal powder. With respect to the air to be used for drying, outside air was compressed to 0.7 MPa with a compressor, the air was dehumidified with a low-temperature chiller, the temperature thereof was controlled to a predetermined temperature, and then the air was introduced into the Sepa-rohto at a flow rate of 150 mL/min. With respect to the temperature, dew point, and carbon dioxide concentration of the air inside the Sepa-rohto, the temperature, dew point, and carbon dioxide concentration of the gas were measured at 1 atm with a carbon dioxide sensor (trade name "FUSO-77535," manufactured by FUSO Co., Ltd.) immediately before it was introduced into the Sepa-rohto.

[Example 2]

Sodium hypochlorite pentahydrate crystal powder was obtained in the same manner as in Example 1 except that carbon dioxide supplied from a carbon dioxide cylinder was mixed with the air used in the drying step of Example 1 to obtain a carbon dioxide concentration of 800 ppm.

[Example 3]

Sodium hypochlorite pentahydrate crystal powder was obtained in the same manner as in Example 1 except that carbon dioxide supplied from a carbon dioxide cylinder was mixed with the air used in the drying step of Example 1 to obtain a carbon dioxide concentration of 1200 ppm.

[Example 4]

Sodium hypochlorite pentahydrate crystal powder was obtained in the same manner as in Example 1 except that in the step of crystallizing crystals in Example 1, 10 mL of a 48% by weight aqueous sodium hydroxide solution (0.2 mol of sodium hydroxide) was added to an aqueous solution of sodium hypochlorite, which was a pre-crystallization solution.

[Example 5]

Sodium hypochlorite pentahydrate crystal powder was obtained in the same manner as in Example 1 except that in the step of crystallizing crystals in Example 1, 32 mL of a 48% by weight aqueous sodium hydroxide solution (0.6 mol of sodium hydroxide) was added to an aqueous solution of sodium hypochlorite, which was a pre-crystallization solution.

[Example 6]

Sodium hypochlorite pentahydrate crystal powder was obtained in the same manner as in Example 1 except that in the step of crystallizing crystals in Example 1, 89 mL of a 48% by weight aqueous sodium hydroxide solution (1.6 mol of sodium hydroxide) was added to an aqueous solution of sodium hypochlorite, which was a pre-crystallization solution.

[Example 7]

Sodium hypochlorite pentahydrate crystal powder was obtained in the same manner as in Example 1 except that in the step of crystallizing crystals in Example 1, 256 mL of a 48% by weight aqueous sodium hydroxide solution (4.6 mol of sodium hydroxide) was added to an aqueous solution of sodium hypochlorite, which was a pre-crystallization solution, and carbon dioxide supplied from a carbon dioxide cylinder was mixed with the air used in the drying step of Example 1 to obtain a carbon dioxide concentration of 600 ppm.

[Example 8]

Sodium hypochlorite pentahydrate crystal powder was obtained in the same manner as in Example 1 except that the air used in the drying step of Example 1 was passed through a column packed with 500 g of molecular sieve 4A and a carbon dioxide concentration was set to 250 ppm.

[Comparative Example 1]

The wet sodium hypochlorite pentahydrate crystals obtained in the dehydration step of Example 1 were used for evaluation without being dried.

[Comparative Example 2]

Sodium hypochlorite pentahydrate crystal powder was obtained in the same manner as in Example 1 except that in the step of crystallizing crystals in Example 1, a 48% by weight aqueous sodium hydroxide solution was not added to the aqueous solution of sodium hypochlorite, which was a pre-crystallization solution.

[Comparative Example 3]

The drying operation was carried out in the same manner as in Example 1 except that carbon dioxide supplied from a carbon dioxide cylinder was mixed with the air used in the drying step of Example 1 to obtain a carbon dioxide concentration of 1800 ppm. From approximately 30 minutes after the start of drying, sodium hypochlorite crystals in the lower part of the Sepa-rohto started to be humidified, and then sodium hypochlorite crystals in the Sepa-rohto decomposed rapidly.

[Comparative Example 4]

Sodium hypochlorite pentahydrate crystal powder was obtained in the same manner as in Example 6 except that the dry air used in the drying step of Example 6 was passed through a column packed with 1000 g of molecular sieve 4A to obtain a carbon dioxide concentration of 150 ppm.

In Examples 1 to 8 and Comparative Examples 2 to 4, the components and physical properties of the sodium hypochlorite pentahydrate crystals before and after drying were measured and evaluated by the measurement and evaluation methods described above, and the results are shown in Tables 1 and 2 below. In Comparative Example 1, wet sodium hypochlorite pentahydrate crystals before and after dehydration were taken as sodium hypochlorite pentahydrate crystals before and after drying, respectively, the components and physical properties thereof were measured and evaluated by the measurement and evaluation methods described above, and the results are shown in Table 1 below. The physical properties of the dried crystals (sodium hypochlorite pentahydrate crystal powder) were measured using the sodium hypochlorite pentahydrate crystals immediately after drying. Tables 1 and 2 below also show drying conditions as well as the moisture content between crystals and effective chlorine concentration of the sodium hypochlorite pentahydrate crystals obtained before drying (wet sodium hypochlorite pentahydrate crystals). In the following, the angle of repose in Comparative Example 1 is a reference value since the crystals had poor fluidity and were forcibly discharged using a spatula to be measured and therefore the value thus obtained is not a stable value. In Tables 1 and 2 below, the molar fraction of NaOH is a molar fraction of NaOH (sodium hydroxide), which was added to the aqueous solution of sodium hypochlorite, relative to sodium hypochlorite.

[Table 1]

| | | | Example | 1 | 2 | 3 | 4 | 5 | 6 | 7 | 8 |
|---|---|---|---|---|---|---|---|---|---|---|---|
| | | | NaOH Molar Fraction | 0.13 | 0.13 | 0.13 | 0.01 | 0.03 | 0.08 | 0.20 | 0.13 |
| Before Drying | Moisture Content between Crystals | % by weight | | 5.4 | 5.4 | 5.4 | 4.9 | 5.7 | 5.7 | 5.6 | 5.4 |
| | NaOH Concentration | %by weight | | 0.18 | 0.18 | 0.18 | 0.01 | 0.04 | 0.10 | 0.27 | 0.18 |
| | Effective Chlorine Concentration | % | | 40.4 | 40.4 | 40.4 | 40.4 | 40.2 | 40.2 | 39.7 | 40.4 |
| Drying Conditions (Air) | Temperature | °C | | 20 | 20 | 20 | 20 | 20 | 20 | 20 | 20 |
| | Dew Point | °C | | -21 | -21 | -21 | -21 | -21 | -21 | -21 | -21 |
| | Carbon Dioxide Concentration | ppm | | 420 | 800 | 1200 | 420 | 420 | 420 | 600 | 250 |
| | Drying Time | min | | 60 | 60 | 60 | 60 | 60 | 60 | 60 | 60 |
| After Drying | Moisture Content between Crystals | % by weight | | 0.14 | 0.06 | 0.02 | 0.80 | 0.83 | 0.71 | 0.45 | 0.38 |
| | Effective Chlorine Concentration | % | | 42.1 | 41.9 | 42.5 | 42.0 | 42.1 | 42.0 | 42.3 | 42.5 |
| | Sodium Carbonate Concentration | % by weight | | 0.83 | 1.10 | 0.83 | 0.12 | 0.23 | 0.38 | 0.84 | 0.42 |
| | Angle of Repose | Degree | | 31 | 30 | 30 | 32 | 31 | 31 | 34 | 33 |
| | Loose Apparent Density | g/mL | | 0.67 | 0.68 | 0.67 | 0.68 | 0.67 | 0.67 | 0.69 | 0.67 |
| | Crystal Fluidity | - | | Good | Good | Good | Good | Good | Good | Good | Good |
| | Storage | hr | | 170 | 250 | 130 | 100 | 120 | 130 | 170 | 150 |
| | Stability (23°C) | | | | | | | | | | |

[Table 2]

| Comparative Examples | | | 1 | 2 | 3 | 4 |
|---|---|---|---|---|---|---|
| NaOH Molar Fraction | | | 0.13 | 0 | 0.13 | 0.08 |
| Before Drying | Moisture Content between Crystals | % by weight | 5.4 | 5.4 | 5.4 | 5.7 |
| | NaOH Concentration | % by weight | 0.18 | 0.0 | 0.18 | 0.10 |
| | Effective Chlorine Concentration | % | 40.4 | 40.2 | 40.4 | 40.2 |
| Drying Conditions (Air) | Temperature | °C | Not Dried | 20 | 20 | 20 |
| | Dew Point | °C | | -21 | -21 | -21 |
| | Carbon Dioxide Concentration | ppm | | 420 | 1800 | 150 |
| | Drying Time | min | | 60 | 60 | 60 |
| After Drying | Moisture Content between Crystals | % by weight | 5.4 | 0.09 | Decomposed | 0 |
| | Effective Chlorine Concentration | % | 40.2 | 40.6 | | 43.4 |
| | Sodium Carbonate Concentration | % by weight | 0.06 | 0.04 | | 0.07 |
| | Angle of Repose | Degree | 53 | 30 | | 32 |
| | Loose Apparent Density | g/mL | 0.51 | 0.65 | | 0.66 |
| | Crystal Fluidity | - | Poor | Good | | Good |
| | Storage Stability (23°C) | hr | 30 | 10 | | 40 |

As can be seen from the results in Table 1 above, in the presence of sodium hydroxide having a concentration of 0.01% by weight or more, air having a temperature of less than 25°C, a dew point of -2°C or lower, and a carbon dioxide concentration of 250 ppm to 1600 ppm was used to carry out drying until the moisture content between crystals became 2.5% by weight or lower to obtain sodium hypochlorite pentahydrate crystal powders of Examples 1 to 8, which were able to be stored for 100 hours or more at 23°C and thus were excellent in storage stability.

On the other hand, as can be seen from the results in Table 2, wet sodium hypochlorite pentahydrate crystals of Comparative Example 1, which were only dehydrated but not dried, had poor storage stability. With respect to the sodium hypochlorite pentahydrate crystal powder of Comparative Example 2, the gas used for drying was the same as that used in Example 1, but sodium hydroxide was not added to the pre-crystallization solution, that is, the wet sodium hypochlorite pentahydrate crystals did not contain sodium hydroxide, which resulted in inferior storage stability. In Comparative Example 3, in which air having a dew point of -21°C but a carbon dioxide concentration of 1800 ppm was used to dry the wet sodium hypochlorite pentahydrate crystals, foaming and liquefaction occurred due to rapid decomposition from the lower part of the Sepa-rohto during the drying operation and thereby sodium hypochlorite pentahydrate crystal powder was not obtained. In Comparative Example 4, in which the concentration of carbon dioxide in the air used for drying was as low as 150 ppm, the resultant sodium hypochlorite crystal powder had poor storage stability.

[Example 9]

600 g of dehydrated crystals obtained in the same crystallization step and dehydration step as in Example 1 were placed in a rotating disk-type fluidized dryer (Marumerizer QJ-230T-2, manufactured by Dalton Corporation). The outside air was sucked with a turbofan, controlled with a cooling device (plate-fin cooler) to have a predetermined temperature, and dehumidified with a dehumidification column packed with a total of 1 kg of molecular sieve 4A and silica gel (large grain, white). The resultant air was used as dry air to be introduced through the gap between the inner rotating disk and the main body part at a flow rate of 400 L/min. With the rotational speed of the rotating disk being set to 400 rpm, the dehydrated crystals were treated for 20 minutes and thus fluidized drying thereof was completed. The temperature, dew point, and carbon dioxide concentration of the air introduced into the dryer were measured with a carbon dioxide sensor (trade name: "FUSO-77535", manufactured by FUSO) immediately before the air was introduced into the dryer. As a result, the air had a temperature of 24.7°C, a dew point of -31.2°C, and a carbon dioxide concentration of 351 ppm.

[Example 10]

Crystal powder was obtained in the same manner as in Example 9 except that the outside air was strongly cooled and the filler of the dehumidification column was replaced with 500 g of molecular sieve 4A, and thereby the temperature, dew point, and carbon dioxide concentration of the air to be introduced into the dryer were adjusted to 13.8°C, -4.5°C, and 262 ppm, respectively.

[Example 11]

Crystal powder was obtained in the same manner as in Example 9 except that the degree of cooling of the outside air was adjusted and the amount of the filler of the dehumidification column was changed to 300 g, and thereby the temperature, dew point, and carbon dioxide concentration of the air to be introduced into the dryer were adjusted to 18.6°C, -2.0°C, and 283 ppm, respectively.

[Example 12]

Crystal powder was obtained in the same manner as in Example 9 except that the filler of the dehumidification column was 1 kg of silica gel and thereby the temperature, dew point, and carbon dioxide concentration of the air to be introduced into the dryer were adjusted to 24.0°C, -45.7°C, and 440 ppm, respectively.

[Comparative Example 5]

Drying treatment was carried out in the same manner as in Example 9 except that the outside air was strongly cooled and the filler of the dehumidification column was changed to none and thereby the temperature, dew point, and carbon dioxide concentration of the air to be introduced into the dryer were adjusted to 14.3°C, -1.6°C, and 360 ppm, respectively. When being brushed out after 20 minutes, the crystals became moister than before being placed in the dryer. Thus, it was judged that the crystals were not able to be dried.

[Comparative Example 6]

Drying treatment was carried out in the same manner as in Example 9 except that the outside air was not cooled, the filler of the dehumidification column was changed to 300 g of silica gel and thereby the temperature, dew point, and carbon dioxide concentration of the air to be introduced into the dryer were adjusted to 30.9°C, -5.7°C, and 368 ppm, respectively. From approximately five minutes after the start of drying, a melted liquid started leaking out of the dryer and therefore, the treatment was stopped.

[Comparative Example 7]

Crystallization and dehydration of crystals were carried out in the same manner as in Example 1 except that the 48% by weight aqueous sodium hydroxide solution was not added to the pre-crystallization solution of sodium hypochlorite. Thus, the dehydrated sodium hypochlorite pentahydrate crystals were obtained.

[Comparative Example 8]

Approximately 0.4 g of sodium carbonate (special grade reagent, manufactured by Nacalai Tesque, Inc., particle size: approximately 0.3 to 0.5 mm) was added little by little to 100 g of dehydrated sodium hypochlorite pentahydrate crystals obtained in the same manner as in Comparative Example 7, while being stirred.

[Comparative Example 9]

Approximately 0.7 g of sodium carbonate (special grade reagent, manufactured by Nacalai Tesque, Inc., particle size: approximately 0.3 to 0.5 mm) was added little by little to 100 g of dehydrated sodium hypochlorite pentahydrate crystals obtained in the same manner as in Comparative Example 7, while being stirred.

[Comparative Example 10]

Approximately 0.4 g of sodium carbonate (special grade reagent, manufactured by Nacalai Tesque, Inc., particle size: approximately 0.3 to 0.5 mm) was added little by little to 100 g of sodium hypochlorite pentahydrate crystal powder obtained in the same manner as in Comparative Example 2, while being stirred.

[Comparative Example 11]

Approximately 0.7 g of sodium carbonate (special grade reagent, manufactured by Nacalai Tesque, Inc., particle size: approximately 0.3 to 0.5 mm) was added little by little to 100 g of sodium hypochlorite pentahydrate crystal powder obtained in the same manner as in Comparative Example 2, while being stirred.

In Examples 9 to 12 and Comparative Examples 5 to 11, the components and physical properties of the sodium hypochlorite pentahydrate crystals before and after drying were measured and evaluated by the measurement and evaluation methods described above, and the results are shown in Tables 3 and 4 below. The physical properties of the dried crystals (sodium hypochlorite pentahydrate crystal powder) were measured using sodium hypochlorite pentahydrate crystals immediately after drying. In Comparative Examples 7 to 11, "after drying" denotes after addition of sodium carbonate. Tables 3 and 4 below also show drying conditions as well as the moisture content between crystals and effective chlorine concentration of the sodium hypochlorite pentahydrate crystals obtained before drying (wet sodium hypochlorite pentahydrate crystals). In Comparative Example 5, although the sodium hypochlorite pentahydrate crystals after the drying step were not actually dried, they were taken as dried sodium hypochlorite pentahydrate crystals and their components and physical properties were measured. In the following, the angle of repose in Comparative Example 5 is a reference value since the crystals had poor fluidity and were forcibly discharged using a spatula to be measured and therefore the value thus obtained is not a stable value. In Tables 3 and 4 below, the molar fraction of NaOH is a molar fraction of NaOH (sodium hydroxide), which was added to the aqueous solution of sodium hypochlorite, relative to sodium hypochlorite.

[Table 3]

| Example | | | | 9 | 10 | 11 | 12 |
|---|---|---|---|---|---|---|---|
| NaOH Molar Fraction | | | | 0.13 | 0.13 | 0.13 | 0.13 |
| Before Drying | Moisture Content between Crystals | % by weight | | 5.7 | 5.1 | 5.0 | 4.8 |
| | NaOH Concentration | % by weight | | 0.18 | 0.18 | 0.18 | 0.18 |
| | Effective Chlorine Concentration | % | | 39.8 | 40.1 | 40.2 | 39.9 |
| Drying Conditions (Air) | Temperature | °C | | 24.7 | 13.8 | 18.6 | 24.0 |
| | Dew Point | °C | | -31.2 | -4.5 | -2.0 | -45.7 |
| | Carbon Dioxide Concentration | ppm | | 351 | 262 | 283 | 440 |
| | Drying Time | min | | 20 | 20 | 20 | 20 |
| After Drying | Moisture Content between Crystals | % by weight | | 0 | 0 | 0.10 | 0 |
| | Effective Chlorine Concentration | % | | 42.6 | 42.7 | 42.6 | 42.7 |
| | Sodium Carbonate Concentration | % by weight | | 0.82 | 0.58 | 0.63 | 0.84 |
| | Angle of Repose | Degree | | 35 | 32 | 34 | 32 |
| | Loose Apparent Density | g/mL | | 0.65 | 0.64 | 0.65 | 0.65 |
| | Crystal Fluidity | - | | Good | Good | Good | Good |
| | Storage Stability (23°C) | hr | | 150 | 140 | 140 | 160 |

[Table 4]

| Comparative Example | 5 | 6 | 7 | 8 | 9 | 10 | 11 |
|---|---|---|---|---|---|---|---|
| NaOH Molar Fraction | 0.13 | 0.13 | 0 | 0 | 0 | 0 | 0 |

(continued)

| Comparative Example | | | 5 | 6 | 7 | 8 | 9 | 10 | 11 |
|---|---|---|---|---|---|---|---|---|---|
| Before Drying | Moisture Content between Crystals | % by weight | 5.0 | 4.8 | 5.4 | 5.4 | 5.4 | 5.4 | 5.4 |
| | NaOH Concentration | %by weight | 0.18 | 0.18 | 0 | 0 | 0 | 0 | 0 |
| | Effective Chlorine Concentration | % | 40.2 | 39.9 | 40.4 | 40.4 | 40.4 | 40.4 | 40.4 |
| Drying Conditions (Air) | Temperature | °C | 14.3 | 30.9 | Not Dried | | | 20 | 20 |
| | Dew Point | °C | -1.6 | -5.7 | | | | -21 | -21 |
| | Carbon Dioxide Concentration | ppm | 360 | 368 | | | | 420 | 420 |
| | Drying Time | min | 20 | 20 | | | | 60 | 60 |
| After Drying | Moisture Content between Crystals | % by weight | 6.4 | Melted | 5.4 | 5.4 | 5.4 | 0.09 | 0.09 |
| | Effective Chlorine Concentration | % | 39.7 | | 40.4 | 40.4 | 40.4 | 40.6 | 40.6 |
| | Sodium Carbonate Concentration | % by weight | 0.72 | | 0.04 | 0.81 | 1.15 | 0.85 | 1.14 |
| | Angle of Repose | Degree | 60 | | 53 | 53 | 53 | 32 | 32 |
| | Loose Apparent Density | g/mL | 0.50 | | 0.51 | 0.51 | 0.51 | 0.65 | 0.65 |
| | Crystal Fluidity | - | Poor | | Poor | Poor | Poor | Good | Good |
| | Storage Stability (23°C) | hr | 20 | | 10 | 30 | 40 | 30 | 40 |

As can be seen from the results in Table 3 above, in the presence of sodium hydroxide having a concentration of 0.01% by weight or more, air having a temperature of less than 25°C, a dew point of -2°C or lower, and a carbon dioxide concentration of 250 ppm to 1600 ppm was used to carry out drying until the moisture content between crystals became 2.5% by weight or lower to obtain sodium hypochlorite pentahydrate crystal powders of Examples 9 to 12, which were able to be stored for 100 hours or more at 23°C and thus were excellent in storage stability.

On the other hand, as can be seen from the results in Table 4, in Comparative Example 5, in which drying was carried out using air having a dew point higher than -2°C, and Comparative Example 6, in which drying was carried out using air having a temperature of 25°C or higher, it was not possible to obtain sodium hypochlorite pentahydrate crystal powder.

Furthermore, as can be seen from the results in Table 4, after crystallization of the sodium hypochlorite pentahydrate crystals, for example, when sodium carbonate was added to and mixed with dehydrated or dried sodium hypochlorite pentahydrate crystals, storage stability was poor even when the concentration of the sodium carbonate exceeded 1% by weight.

Since sodium hypochlorite pentahydrate crystal powders in Examples 1 to 12 can be stored at 23°C for 100 hours or more, it is assumed that they can be stored for about 1 year under a refrigerated storage condition of 5°C or less. This means that they also are excellent in storage stability at further lower temperatures.

Claims

1.  A production method for sodium hypochlorite pentahydrate crystal powder, the method comprising:

    drying wet sodium hypochlorite pentahydrate crystals with a gas until the moisture content of the crystals reaches 2.5% by weight or lower,

wherein the gas has a temperature of less than 25°C, a dew point of -2°C or lower, and a carbon dioxide concentration of 250 ppm to 1600 ppm, and

wherein the wet sodium hypochlorite pentahydrate crystals have a sodium hydroxide concentration of 0.01% by weight or higher.

2. The production method for sodium hypochlorite pentahydrate crystal powder according to claim 1, wherein the drying is carried out under normal pressure or reduced pressure.

3. The production method for sodium hypochlorite pentahydrate crystal powder according to claim 1 or 2, wherein the sodium hypochlorite pentahydrate crystal powder has a higher effective chlorine concentration than that of the wet sodium hypochlorite pentahydrate crystals.

4. The production method for sodium hypochlorite pentahydrate crystal powder according to any one of claims 1 to 3, wherein an aqueous sodium hydroxide solution is reacted with chlorine gas, sodium chloride is filtered out from the reaction solution to obtain an aqueous solution of sodium hypochlorite, from which sodium hypochlorite pentahydrate crystals are crystalized, and thus the wet sodium hypochlorite pentahydrate crystals are obtained, and before the sodium hypochlorite pentahydrate crystals are crystalized, sodium hydroxide is added to the aqueous solution of sodium hypochlorite so as to have a molar fraction in a range of 0.01 to 0.26 with respect to the sodium hypochlorite.

5. A sodium hypochlorite pentahydrate crystal powder, the powder comprising sodium carbonate, wherein the sodium carbonate is present on surfaces of the sodium hypochlorite pentahydrate crystals, and wherein the powder has a sodium carbonate concentration of 0.1% by weight or more and a moisture content between crystals of 2.5% by weight or less.

6. The sodium hypochlorite pentahydrate crystal powder according to claim 5, wherein the powder has an angle of repose of 40° or less.

7. The sodium hypochlorite pentahydrate crystal powder according to claim 5 or 6, wherein the loose apparent density measured according to JIS K 7365 (1999) is 0.60 g/mL or more.

8. The sodium hypochlorite pentahydrate crystal powder according to any one of claims 5 to 7, wherein the powder has an effective chlorine concentration of 41% by weight or more.

9. An aqueous solution of sodium hypochlorite, the aqueous solution being obtained using sodium hypochlorite pentahydrate crystal powder according to any one of claims 5 to 8.

## INTERNATIONAL SEARCH REPORT

| International application No. |
| --- |
| PCT/JP2017/043050 |

**A. CLASSIFICATION OF SUBJECT MATTER**
Int.Cl. C01B11/06(2006.01)i

According to International Patent Classification (IPC) or to both national classification and IPC

**B. FIELDS SEARCHED**

Minimum documentation searched (classification system followed by classification symbols)
Int.Cl. C01B11/06

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)
JSTPlus/JSTChina/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-533775 A (OLIN CORP.) 26 November 2015, claims, paragraph [0019], table 1 & US 2014/0117278 A1, claims, paragraph [0019], table 1 & WO 2014/070928 A2 & EP 2914545 A2 & CA 2889512 A1 & AU 2013337897 A1 & CN 104837763 A & MX 2015005381 A | 1-9 |
| A | JP 2014-169215 A (KANEKA CORP.) 18 September 2014, entire text (Family: none) | 1-9 |
| A | JP 2000-290003 A (NIPPON LIGHT METAL CO., LTD.) 17 October 2000, entire text (Family: none) | 1-9 |
| A | JP 49-28354 B1 (TOA-GOSEI CHEMICAL INDUSTRY CO., LTD.) 25 July 1974, entire text (Family: none) | 1-9 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 February 2018 (02.02.2018) | 13 February 2018 (13.02.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2017/043050 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 45-37134 B1 (TOA-GOSEI CHEMICAL INDUSTRY CO., LTD.) 25 November 1970, entire text (Family: none) | 1-9 |
| E, X | WO 2017/208501 A1 (NIPPON LIGHT METAL CO., LTD.) 07 December 2017, claims, paragraphs [0027], [0048] (Family: none) | 5-9 |
| E, A | | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S451970037134 B
- JP S491974028354 B
- JP 2000290003 A
- JP 2014169215 A

**Non-patent literature cited in the description**

- **ARIHIRO HAMANO.** Jiaensosansoda Kesshou no Bunkaisokudo (Decomposition Rate of Sodium Hypochlorite Crystals). *Research Reports of National Institute of Technology, Sasebo College,* 02 September 1970, vol. 7, 131-138